# EUROPÄISCHE PATENTSCHRIFT

(11) **EP 1 356 199 B1**
(45) Veröffentlichungstag und Bekanntmachung des Hinweises auf die Patenterteilung: **26.05.2004**
(21) Anmeldenummer: 02701223.6
(22) Anmeldetag: 24.01.2002
(51) Int. Cl.: F02M 37/22

(54) **FLÜSSIGKEITSFILTER MIT ENTLÜFTUNGSBOHRUNGEN**
LIQUID FILTER COMPRISING AIR VENTS
FILTRE A LIQUIDE A ORIFICES DE PURGE D'AIR

(30) Priorität: 31.01.2001 DE 20101572 U
(43) Veröffentlichungstag der Anmeldung: 29.10.2003
(73) Patentinhaber: Hengst GmbH & Co. KG, 48147 Münster (DE)
(72) Erfinder: SCHACHTRUP, Ludger, 48163 Münster (DE); REUTER, Andreas, 48165 Münster (DE)
(74) Vertreter: Habbel, Ludwig (Lutz) (DE)
(86) Internationale Anmeldenummer: PCT/DE2002/000233
(87) Internationale Veröffentlichungsnummer: WO 2002/061264

(56) Entgegenhaltungen:
- WO-A-90/11444
- DE-A- 19 716 085
- DE-A- 19 934 378
- DE-C- 4 014 551

## Beschreibung

Die Neuerung betrifft einen Flüssigkeitsfilter nach dem Oberbegriff des Anspruches 1.

Aus der DE 195 19 352 C2 ist ein gattungsgemäßer Filter bekannt. Bei einer Verwendung beispielsweise als Kraftstofffilter für Dieselkraftstoff sollen Luftblasen vermieden werden, die dem Motor zugefördert werden könnten, so daß aus diesem Grund eine Entlüftung im Flüssigkeitsfilter vorgesehen ist. Durch diese Entlüftung und insbesondere durch die dabei vorgesehene Bohrung, die auch als Entlüftungsdüse bezeichnet wird, ergibt sich ein permanenter Verlust-Volumenstrom an Kraftstoff, der direkt in den Tank zurückgefördert wird, zusammen mit den Luftblasen. In der Praxis sind beispielsweise Bohrungen mit Durchmessern von 0,7 mm üblich. Der durch diese vergleichsweise großen Bohrungen gelangende Verlust-Volumenstrom soll jedoch möglichst gering sein.

Der Neuerung liegt die Aufgabe zugrunde, einen gattungsgemäßen Flüssigkeitsfilter dahingehend zu verbessern, daß bei zuverlässiger Entlüftung der Verlust-Volumenstrom möglichst gering ist, wobei eine zuverlässige Beibehaltung der Entlüftungsfunktion gewährleistet ist und die Herstellung des Flüssigkeitsfilters möglichst kostengünstig erfolgen kann.

Diese Aufgabe wird durch einen Flüssigkeitsfilter mit den Merkmalen des Anspruches 1 gelöst.

Die Neuerung schlägt mit anderen Worten vor, zwei Entlüftungsdüsen hintereinander zu schalten, d. h. zwei Bohrungen vorzusehen, die in Strömungsrichtung der Luftblasen bzw. des Kraftstoff-Verluststromes hintereinander angeordnet sind. Auf diese Weise ergibt sich ein vergrößerter Widerstand für die Flüssigkeit verglichen mit der Verwendung lediglich einer gleichgroßen Entlüftungsdüse. Dieser vergrößerte Widerstand könnte bei Verwendung lediglich einer Entlüftungsdüse durch einen geringeren Durchmesser der Bohrung erzielt werden, wobei dies jedoch herstellungstechnisch aufwendig sein kann und zudem die Gefahr bergen kann, daß die besonders kleine Bohrung schnell verstopft, so daß die Entlüftungsfunktion nicht mehr gegeben ist. Vorteilhaft lassen sich die beiden Bohrungen gemäß der vorliegenden Neuerung mit der bislang verwendeten Herstellungsweise herstellen.

So werden teils widersprüchliche Ziele erreicht: erstens eine problemlose Herstellbarkeit, da Dorne in Spritzgußwerkzeugen verwendet werden können, die den vergleichsweise großen Durchmesser der zu erzeugenden Bohrung aufweisen und dementsprechend stabil und bruchunempfindlich sind; zweitens ergibt der vergleichsweise große Durchmesser der Bohrungen während des Betriebs des Filters eine Sicherheit gegenüber Verstopfungen, und drittens wird trotz der vergleichsweise großen Durchmesser der einzelnen Bohrungen der erwünschte höhere Strömungswiderstand für die Flüssigkeit erzielt.

Vorteilhaft kann zwischen den beiden Bohrungen ein Entspannungsraum vorgesehen sein, welcher einen gegenüber den beiden Bohrungen erheblich größeren Querschnitt aufweist. Durch diesen Entspannungsraum wird der Effekt vermieden, daß sich eine Bohrung mit besonders großer Länge ergibt, so daß auch hierdurch die Verstopfungssicherheit der Entlüftungsdüsenanordnung verbessert wird und die Herstellbarkeit vereinfacht wird. Zudem kann durch eine Strömungsumlenkung bzw. Verwirbelung innerhalb des Entspannungsraumes der Strömungswiderstand ggf. beeinflusst, nämlich erhöht werden.

Vorteilhaft kann vorgesehen sein, die eine der beiden Bohrungen an einem auswechselbaren Filterbauteil vorzusehen und die andere der beiden Bohrungen an einem filterfesten Bauteil. Durch diese Aufteilung der Bohrungen in filterfeste und auswechselbare Bestandteile des Filters ist es auf einfache Weise preisgünstig möglich, im Rahmen der ohnehin erfolgenden Montage des Filters die beiden Bohrungen in Strömungsrichtung hintereinander anzuordnen. Bei einer üblichen Ausgestaltung eines Flüssigkeitsfilters wie z. B. dem gattungsgemäßen Filter kann eine Bohrung in der Endscheibe des Filtereinsatzes, und die andere Bohrung am Entlüftungsrohr vorgesehen sein.

Es kann selbstverständlich vorgesehen werden, mehr als die vorerwähnten zwei Bohrungen zu verwenden. So kann beispielsweise eine Art "Düsenstrecke" gebildet werden aus mehreren Bohrungen, z. B. aus beliebig vielen hintereinander angeordneten und ineinander steckbaren konischen und topfartigen Bauteilen, die im "Topfboden" jeweils die Bohrung aufweisen und die miteinander verbunden werden können, beispielsweise verpresst, verklebt oder verschweißt, und wobei die gesamte Düsenstrecke anschließend in den Filter eingebaut werden kann.

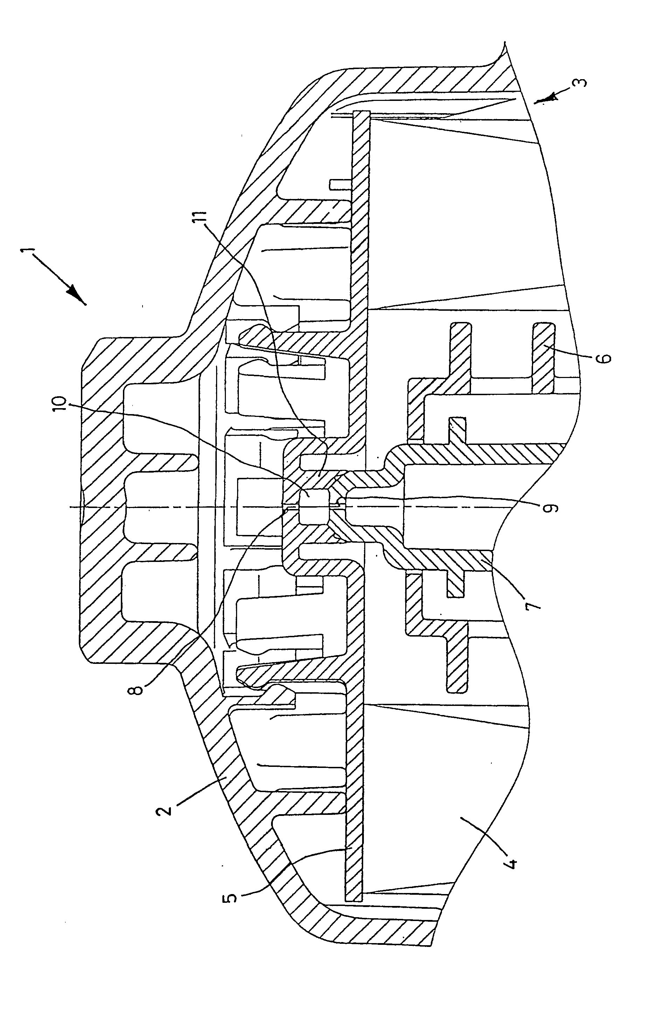

Ein Ausführungsbeispiel der Neuerung wird anhand der Zeichnung im folgenden näher erläutert.

Dabei ist mit 1 allgemein ein lediglich ausschnittsweise dargestellter Flüssigkeitsfilter bezeichnet, der als Kraftstofffilter für ein Fahrzeug mit Verbrennungsmotor vorgesehen ist. Der Flüssigkeitsfilter 1 weist einen Deckel 2 auf, der auf ein nicht dargestelltes Filtergehäuse aufgeschraubt werden kann. Nach Entfernen des Deckels 2 kann ein Filtereinsatz 3 ausgewechselt werden, wobei dieser Filtereinsatz 3 aus lediglich drei Komponenten besteht, nämlich einem Filtermedium 4, beispielsweise in Form eines Papierfaltenfilters, sowie zwei aus Kunststoff bestehenden Endscheiben, von denen in der Zeichnung lediglich die obere Endscheibe 5 dargestellt ist.

Um das Filtermedium 4 im Betrieb, wenn es ggf. erweicht, abzustützen, ist im Inneren des Filtereinsatzes 3 ein Stützdom 6 vorgesehen, an den sich das Filtermedium 4 im Betrieb des Filters 1 anlegen kann. Der zu filternde Kraftstoff tritt von radial außen nach radial innen durch das Filtermedium 4 hindurch, gelangt dort auf die Reinseite des Filters 1 und kann nach unten abfließen. Auf dieser Reinseite des Filters 1, nämlich innerhalb des Stützdomes 6, ist ein Entlüftungsrohr 7 vorgesehen, durch welches permanent ein Verluststrom zurück in den Kraftstofftank fließt: Von der Rohseite des Filters 1, also von außerhalb des Filtereinsatzes 3, kann Kraftstoff durch eine erste Bohrung 8, die in der oberen Endscheibe 5 des Filtereinsatzes 3 vorgesehen ist, gelangen und anschließend durch eine zweite Bohrung 9, die in der oberen Stirnwand des Entlüftungsrohres 7 vorgesehen ist. Zwischen den beiden Bohrungen 8 und 9 befindet sich ein Entspannungsraum 10.

Zwischen der oberen Endscheibe 5 und der Stirnseite des Entlüftungsrohres 7 ist ein Kragen 11 an der oberen Endscheibe 5 vorgesehen, welcher an seiner Unterseite, wo er dem Entlüftungsrohr 7 anliegt, eine Dichtungskontur aufweist, so daß hier ein flüssigkeitsdichter Anschluß der oberen Endscheibe 5 an das Entlüftungsrohr 7 gewährleistet ist.

Abweichend von dem dargestellten Ausführungsbeispiel können mehr als zwei Bohrungen hintereinandergeschaltet vorgesehen sein.

## Patentansprüche

1. Flüssigkeitsfilter für Kraftfahrzeuge, wie Kraftstofffilter für einen Verbrennungsmotor,
mit einer Entlüftungsanordnung für die aus dem Filter bei ansteigendem Flüssigkeitsvolumen verdrängte Luft,
wobei die Entlüftungsanordnung eine als Entlüftungsdüse bezeichnete Bohrung aufweist, welche für die Luft einen geringen und für die Flüssigkeit einen großen Widerstand aufweist,
**dadurch gekennzeichnet,**
**daß** zwei Entlüftungsdüsen hintereinander geschaltet sind,
wobei eine zweite derartige Bohrung (9) vorgesehen ist,
und die beiden Bohrungen (8, 9) in Strömungsrichtung der Luft hintereinander angeordnet sind,
und wobei beide Bohrungen (8, 9) einen vergrößerten Widerstand für die Flüssigkeit bilden - verglichen mit der Verwendung einer Entlüftungsdüse mit lediglich einer einzigen Bohrung von der Größe, wie sie eine der beiden Bohrungen (8, 9) aufweist.

2. Flüssigkeitsfilter nach Anspruch 1, **gekennzeichnet durch** einen Entspannungsraum (10), welcher zwischen den beiden Bohrungen (8, 9) angeordnet ist und einen erheblich größeren Querschnitt aufweist als die beiden Bohrungen (8, 9), derart, dass die beiden Bohrungen (8, 9) unter Vermeidung des Effektes, eine Bohrung mit besonders großer Länge zu ergeben, voneinander beabstandet sind.

3. Flüssigkeitsfilter nach Anspruch 1 oder 2, **dadurch gekennzeichnet, daß** die eine Bohrung (8) an einem auswechselbaren Filtereinsatz (3) vorgesehen ist, wie an einer Endscheibe (5) dieses Filtereinsatzes (3), und die andere Bohrung (9) an einem filterfesten Bauteil vorgesehen ist, wie an einem Stützdom (6), welcher das Filtermedium (4) eines kreisringförmigen Filtereinsatzes (3) innen abstützt.

4. Flüssigkeitsfilter nach einem der vorhergehenden Ansprüche, **dadurch gekennzeichnet, daß** mehr als zwei Bohrungen (8, 9) hintereinander vorgesehen sind.

## Claims

1. Liquid filter for motor vehicles, for example, fuel filter for an internal combustion engine,
with a bleeding arrangement for the air displaced from the filter as the volume of liquid rises,
where the bleeding arrangement incorporates a hole described as a bleeding jet which incorporates a low resistance for the air and a high resistance for the liquid,
**characterised in that**,
two bleeding jets are arranged one behind the other, where a second such hole (9) is provided,
and the two holes (8, 9) are arranged one behind the other in the direction of air flow,
and where both holes (8, 9) form an increased resistance for the liquid-compared with the use of a bleeding jet with only a single hole of the same size as one of the two holes (8, 9).

2. Liquid filter in accordance with claim 1, **characterised by** an expansion chamber (10) which is located between the two holes (8, 9) and incorporates a considerably larger cross-section than the two holes (8, 9) such that the two holes (8, 9) are set at a distance from one another while avoiding the effect of producing a hole of especially great length.

3. Liquid filter in accordance with claim 1 or 2, **characterised in that** one hole (8) is provided on an exchangeable filter insert (3), for example, on an end plate (5) of this filter insert (3), and the other hole (9) is provided on a fixed filter component, for example, on a support mandrel (6) internally supporting the filter medium (4) of an annular filter insert (3).

4. Liquid filter in accordance with one of the foregoing claims, **characterised in that** more than two holes (8, 9) are provided one behind the other.

## Revendications

1. Filtre à liquide pour véhicules à moteur, tel qu'un filtre à carburant pour un moteur à combustion interne,
avec un dispositif de purge d'air pour l'air chassé du filtre lorsque le volume de liquide augmente,
dans lequel le dispositif de purge d'air présente un alésage appelé éjecteur de purge d'air, qui présente une faible résistance à l'air et une forte résistance au liquide,
**caractérisé en ce que** deux éjecteurs de purge d'air sont montés l'un à la suite de l'autre,
un deuxième alésage (9) de ce type étant prévu,
et les deux alésages (8, 9) étant disposés l'un derrière l'autre dans le sens d'écoulement de l'air,
et les deux alésages (8, 9) présentant une résistance accrue au liquide par rapport à l'utilisation d'un éjecteur de purge d'air avec un seul alésage de la taille de l'un des deux alésages (8, 9).

2. Filtre à liquide selon la revendication 1, **caractérisé en ce qu'**il comporte un espace de détente (10) disposé entre les deux alésages (8, 9) et qui présente une section nettement plus grande que les deux alésages (8, 9), de telle sorte que les deux alésages (8, 9) soient écartés l'un de l'autre en évitant de créer un alésage d'une longueur particulièrement grande.

3. Filtre à liquide selon la revendication 1 ou 2, **caractérisé en ce qu'**un alésage (8) est prévu sur un insert de filtre (3) interchangeable, par exemple sur un disque d'extrémité (5) de cet insert de filtre (3), et l'autre alésage (9) est prévu sur un élément solidaire du filtre, tel qu'un mandrin de support (6) qui soutient par l'intérieur le matériau filtrant (4) d'un insert de filtre annulaire (3).

4. Filtre à liquide selon l'une ou l'ensemble des revendications précédentes, **caractérisé en ce que** plus de deux alésages (8, 9) sont prévus les uns derrière les autres.
